(19) Europäisches Patentamt
European Patent Office
Office européen des brevets

(11) **EP 3 069 299 B1**

(12) **FASCICULE DE BREVET EUROPEEN**

(45) Date de publication et mention
de la délivrance du brevet:
**29.12.2021 Bulletin 2021/52**

(21) Numéro de dépôt: **14798814.1**

(22) Date de dépôt: **12.11.2014**

(51) Int Cl.:
***G06K 9/20*** *(2006.01)*     ***G06K 9/00*** *(2006.01)*

(86) Numéro de dépôt international:
**PCT/EP2014/074393**

(87) Numéro de publication internationale:
**WO 2015/071323 (21.05.2015 Gazette 2015/20)**

(54) **SYSTÈME ET PROCÉDÉ DE PRISE DE VUES INTÉGRANT UN SYSTÈME D'ÉCLAIRAGE DE LA SCÈNE À PRENDRE**

FOTOGRAFISCHES SYSTEM UND VERFAHREN MIT EINEM SYSTEM ZUR BELEUCHTUNG EINER ZU FILMENDEN SZENE

PHOTOGRAPHY SYSTEM AND METHOD INCLUDING A SYSTEM FOR LIGHTING THE SCENE TO BE SHOT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2013 FR 1361215**

(43) Date de publication de la demande:
**21.09.2016 Bulletin 2016/38**

(73) Titulaire: **Idemia Identity & Security France
92400 Courbevoie (FR)**

(72) Inventeurs:
• **ROUH, Alain**
**92445 Issy-les-Moulineaux (FR)**
• **BEAUDET, Jean**
**92445 Issy-les-Moulineaux (FR)**
• **DURA, Jeremy**
**92445 Issy-les-Moulineaux (FR)**
• **ROSTAING, Laurent**
**92445 Issy-les-Moulineaux (FR)**

(74) Mandataire: **Cabinet Le Guen Maillet
3, impasse de la Vigie
CS 71840
35418 Saint-Malo Cedex (FR)**

(56) Documents cités:
**US-A1- 2010 034 432**

• **Pere-Pau Vázquez ET AL: "Fast Adaptive Selection of Best Views" In: "Field Programmable Logic and Application", 1 janvier 2003 (2003-01-01), Springer Berlin Heidelberg, Berlin, Heidelberg, XP055120787, ISSN: 0302-9743 ISBN: 978-3-54-045234-8 vol. 2669, pages 295-305, DOI: 10.1007/3-540-44842-X_31, page 297, en particulier la deuxième alinéa**
• **MORTARA M ET AL: "Semantics-driven best view of 3D shapes", COMPUTERS AND GRAPHICS, ELSEVIER, GB, vol. 33, no. 3, 1 juin 2009 (2009-06-01), pages 280-290, XP026448483, ISSN: 0097-8493 [extrait le 2009-03-12]**
• **None**

**Description**

La présente invention concerne un système de prise de vues intégrant un système d'éclairage de la scène à prendre. Elle concerne également un procédé de prise de vues qui peut être mis en œuvre par ledit système de prise de vues ainsi qu'un programme d'ordinateur pour la mise en œuvre dudit procédé.

Des systèmes de prise de vues intégrant un système d'éclairage de la scène à prendre sont connus et on peut citer, à titre d'exemple, des systèmes de prise de vues biométriques dans lesquels l'image d'un visage, d'un iris, d'une empreinte digitale d'une personne est utilisée à des fins de reconnaissance, des systèmes de prise de vues de documents, tels que des documents d'identité, des justificatifs de domicile, des tickets de jeux, etc., dans lesquels l'image du document ou une partie de celle-ci est utilisée à des fins de reconnaissance de l'identité du porteur dudit document, etc. Dans les systèmes de prise de vues où l'invention s'avère être efficace, la position de l'objet à prendre n'est pas prédéterminée, comme c'est le cas d'un scanneur à plat où tous les documents à scanner sont positionnés contre une vitre. Cette position est donc changeante d'une prise de vue à une autre.

Lorsque le système de prise de vues en question intègre un système d'éclairage, du fait que la position de l'objet n'est pas prédéterminée, il peut résulter que dans certaines positions de l'objet des reflets, notamment des reflets spéculaires sur certaines zones de l'objet, peuvent perturber l'imageur en créant des artéfacts dans l'image prise au niveau de ces reflets. De même, les zones autres que celles qui sont les plus fortement éclairées se retrouvent dans la pénombre où le manque de contraste résultant est préjudiciable à une exploitation de l'image prise par l'imageur. Le document US 2010/034432 divulgue la simulation mais pas la prédiction comme définie dans la revendication 1. C'est a dire, il faut deux étapes pour une seule acquisition.

Les documents

Pere-Pau Vázquez ET AL: "Fast Adaptive Selection of Best Views"In: "Field Programmable Logic and Application", 1 janvier 2003 (2003-01-01), Springer Berlin Heidelberg, Berlin, Heidelberg,
et
MORTARA M ET AL: "Semantics-driven best view of 3D shapes",COMPUTERS AND GRAPHICS, ELSEVIER, GB, vol. 33, no. 3, 1 juin 2009 (2009-06-01), pages 280-290
divulguent seulement une sélection d'éclairage pour un modèle 3D artificiel, sans acquisition.

La présente invention a pour objet de résoudre ce problème en incorporant audit système de prise de vues un système d'éclairage qui est piloté par une unité de commande appropriée.

Plus précisément, la présente invention concerne un procédé de prise, comme défini dans la revendication 1, y compris la prise, au moyen d'un imageur, d'une ou plusieurs images d'un objet ou d'une partie d'un objet présenté à distance devant ledit imageur, ledit objet étant éclairé au moyen d'un système d'éclairage.

Avantageusement, ladite étape d'estimation d'un modèle 3D met en œuvre une méthode qui utilise les images prises par un système de prise de vues 3D.

Selon des modes de réalisation particuliers de la présente invention, ledit système de prise de vues 3D est un système à lumière structurée, ou est constitué d'une caméra temps de vol.

Selon un autre mode de réalisation, ladite étape de détermination dudit modèle 3D met en œuvre une méthode stéréoscopique à partir de couples de vues prises par ledit système de prise de vues 3D, ledit système de prise de vues 3D étant constitué soit de deux caméras prenant respectivement les vues de chaque couple simultanément, soit une caméra prenant les vues de chaque couple à deux temps différents.

Selon un mode de réalisation avantageux, l'une des deux caméras ou ladite caméra dudit système de prise de vues 3D constitue l'imageur.

Avantageusement, ladite étape d'estimation d'un modèle 3D comporte :

- une étape de détermination d'une pluralité de modèles 3D dudit objet en respectivement plusieurs temps successifs, et
- une étape d'estimation dudit modèle 3D de l'objet par extrapolation à partir desdits modèles 3D dudit objet.

La présente invention concerne également un système de prise de vues d'un objet, du type comportant un imageur et un système d'éclairage prévu pour éclairer ledit objet.

Selon la présente invention, ledit système de prise de vues est tel que défini par la revendication 6.

Selon des modes de réalisation particuliers, ledit système de prise de vues 3D est un système à lumière structurée, ou est constitué d'une caméra temps de vol, ou constitué de deux caméras, lesdits moyens de détermination dudit modèle 3D mettant alors en œuvre une méthode stéréoscopique.

Avantageusement, lesdits moyens pour estimer ledit modèle 3D comportent :

- des moyens pour déterminer une pluralité de modèles 3D dudit objet en respectivement plusieurs temps successifs, et
- des moyens pour, à partir desdits modèles 3D dudit objet, estimer ledit modèle 3D de l'objet.

Enfin, la présente invention concerne un programme inscrit sur un support et destiné à être chargé dans une unité de traitement d'un système de prise de vues comme précédemment décrit, ledit programme comprenant des instructions ou parties de code pour mettre en œuvre les étapes d'un procédé de prise d'une image d'un objet conforme au procédé précédemment décrit, lorsque ledit programme est exécuté par ladite unité de traitement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 est un schéma synoptique d'un système de prise de vues selon un premier mode de réalisation de l'invention,
- la Fig. 2 est un schéma illustrant la simulation d'éclairage qui est mise en œuvre par l'invention,
- la Fig. 3 est un schéma synoptique d'un système de prise de vues selon un second mode de réalisation de l'invention,
- la Fig. 4 est un diagramme montrant les différentes étapes mises en œuvre par un procédé de prise d'une image d'un objet selon la présente invention, et
- la Fig. 5 est un schéma synoptique d'un système informatique susceptible de mettre en œuvre un procédé de prise d'une image selon la présente invention.

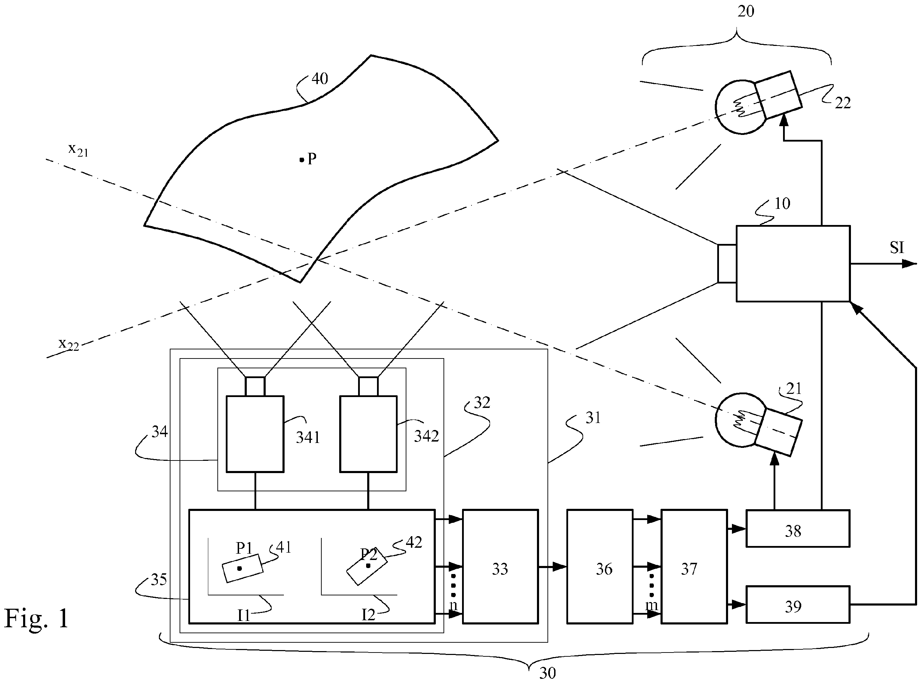

Le système de prise de vues représenté à la Fig. 1 est constitué d'un imageur 10 qui est prévu pour délivrer des signaux d'image SI, un système d'éclairage 20 représenté schématiquement ici sous la forme de deux ampoules 21 et 22 formant source de lumière et une unité de commande 30 prévue pour piloter l'imageur 10 et le système d'éclairage 20.

Selon l'invention, l'unité de commande 30 comporte une unité d'estimation 31 pour estimer un modèle 3D d'un objet 40 tel qu'il se trouvera au temps T0 de la prise d'image effectuée par l'imageur 10.

Dans le mode de réalisation représenté, l'unité d'estimation 31 comporte une unité de modélisation 32 pour déterminer, à différents temps t0 à tn, un modèle 3D de l'objet 40 et une unité d'extrapolation 33 pour déterminer, par extrapolation à partir des modèles 3D de l'objet 40 déterminés par l'unité de modélisation 32, un modèle 3D estimé de l'objet 40 au temps T0 de la prise d'image par l'imageur 10.

L'unité de modélisation 32 comprend, d'une part, un système de prise de vues 3D 34 constitué, dans le mode de réalisation représenté à titre d'exemple, de deux caméras 341 et 342 et, d'autre part, d'une unité de traitement 35 prévue pour effectuer la modélisation 3D proprement dite.

Devant les caméras 341 et 342, l'objet 40 se présente ici sous la forme d'un document plat légèrement gondolé. Cet objet 40 est présenté à distance devant l'imageur 10 (c'est-à-dire présenté en le passant devant l'imageur 10 sans que cet objet 40 repose sur une surface de référence, telle une vitre de scanner, et ainsi que sa position soit connue) et devant les caméras 341 et 342. Un point P particulier de ce document 40 est aussi représenté.

L'unité de traitement 35 est prévue pour recevoir les signaux d'images des caméras 341 et 342 et, à la détection d'un objet 40 devant elles (détection opérée soit par l'unité de commande 30, soit par tout moyen de détection approprié) détermine, à partir de ces signaux d'images, un modèle 3D du document 40 devant elles. Les caméras 341 et 342 sont calibrées ce qui signifie que leurs paramètres intrinsèques sont connus et utilisés par l'unité de traitement 35. Ces paramètres intrinsèques sont par exemple donnés par les coefficients d'une matrice K. De même, les paramètres extrinsèques de l'une des caméras, par exemple la caméra 342, par rapport à l'autre de la paire, sont déterminés et utilisés par l'unité de traitement 35.

On a représenté, dans la boîte de l'unité de traitement 35, l'image I1 délivrée par la caméra 341 et l'image I2 délivrée par la caméra 342. On peut y voir respectivement les images 41 et 42 de l'objet 40 et les images P1 et P2 d'un point P quelconque de l'objet 40.

Les images respectivement ainsi formées d'un point P de coordonnées (x, y, z) sont respectivement des points P1 et P2 de coordonnées (u1, v1) et (u2, v2) dans les images respectives I1 et I2 qui vérifient les équations suivantes :

$$\lambda_1 \begin{bmatrix} P_1 \\ 1 \end{bmatrix} = K \begin{bmatrix} I_3 & 0 \end{bmatrix} \begin{bmatrix} P \\ 1 \end{bmatrix} \qquad (1)$$

et

$$\lambda_2 \begin{bmatrix} P_2 \\ 1 \end{bmatrix} = K' \begin{bmatrix} R_{12} & T_{12} \end{bmatrix} \begin{bmatrix} P \\ 1 \end{bmatrix} \qquad (2)$$

où la matrice $[R_{12}\ T_{12}]$ ($R_{12}$ est une matrice de rotation et $T_{12}$ est une matrice de translation) exprime les paramètres extrinsèques de la caméra 342 par rapport à la caméra 341 et $\lambda_1$ et $\lambda_2$ sont des facteurs inconnus traduisant qu'à un même point image P1, P2 correspond une infinité de points antécédents. $I_3$ est la matrice unité de dimensions $3 \times 3$.

Les images prises par les caméras 341 et 342 étant données, l'unité de traitement 35 est prévue pour mettre en correspondance les points images P1 et P2 comme étant des images d'un même point antécédent P. Cette mise en correspondance est connue de l'homme du métier et peut être réalisée par la méthode qui est exposée dans l'article de Lowe, David G. intitulé "Distinctive Image Features From Scale-Invariant Keypoints" publié dans International journal of computer vision 60.2 (2004) p91-110. Le document de Herbert Bay, Tinne Tuytelaars et Luc Van Gool intitulé « SURF: Speeded Up Robust Features » et publié dans 9th European Conference on Computer Vision, Graz, Autriche, 7-13 mai 2006 mentionne lui-aussi une telle méthode.

Les équations ci-dessus montrent qu'à chaque couple de points images (P1, P2) ainsi mis en correspondance, on a un système linéaire de 6 équations avec seulement 5 inconnues qui sont respectivement les deux facteurs $\lambda_1$ et $\lambda_2$ et les trois coordonnées x, y, z du même point P antécédent de ces points images P1 et P2. Il est donc possible, à partir des images fournies par les caméras 341 et 342 calibrées, de déterminer les coordonnées x, y, z de tout point P antécédent d'un couple de points appariés P1, P2 et ainsi, en considérant une pluralité de couples de points appariés (P1, P2) de déterminer un modèle 3D de l'objet 40 devant elles.

Ce qui est appelé ici un modèle 3D d'un objet est un ensemble discret de points P de coordonnées (x, y, z) qui appartiennent à l'objet réel. D'autres points qui appartiennent aussi à l'objet réel mais qui n'appartiennent pas à cet ensemble discret de points peuvent être obtenus par extrapolation de points du modèle 3D.

En complément de ce qui vient d'être dit ici, il est possible de consulter l'ouvrage de Hartley, Richard and Andrew Zisserman intitulé "Multiple View Geometry In Computer Vision", Cambridge, 2000, notamment pour l'exposé du modèle mathématique ci-dessus et de la méthode de modélisation par stéréoscopie au moyen de deux caméras calibrées.

L'unité de traitement 35 est prévue pour commander plusieurs prises de vues des caméras 341 et 342 à des instants successifs t0 à tn et pour, à chacune d'elles, établir, selon la méthode ci-dessus exposée, un modèle 3D de l'objet 40 à l'instant correspondant. Ces modèles 3D sont fournis à l'unité d'extrapolation 33. Ceci est illustré sur la Fig. 1 par les **n** flèches partant de l'unité de traitement 35 en direction de l'unité d'extrapolation 33.

L'unité d'extrapolation 33 est en mesure d'établir le mouvement de cet objet (Translation et Rotation) et d'estimer la position de l'objet 40 à un temps futur prédéterminé T0 qui sera le temps de prise de vues par l'imageur 10. Cette position sera dite par la suite "Position au temps T0 de prise de vues". Ce qui est appelé "position de l'objet 40" est les coordonnées de chacun des points qui constituent le modèle 3D.

L'unité de commande 30 comporte encore une unité de simulation 36 qui est prévue pour simuler l'éclairage de l'objet 40 par le système d'éclairage 20 au temps T0 de prise de vues, selon différents modes d'éclairage de celui-ci. Pour ce faire, elle estime la quantité de lumière que recevra du système d'éclairage 20 au temps T0 de prise de vue chaque point de l'image prise alors par l'imageur 10. Divers algorithmes peuvent être utilisés pour ce faire, tels que l'algorithme de radiosité, des algorithmes de photométrie analytique, l'algorithme de lancer de rayons (Ray-tracing), etc.

Pour ainsi simuler l'éclairage de l'objet 40, celui-ci est considéré se trouver dans sa position estimée par l'unité de modélisation 31, au temps T0 de prise de vues par l'imageur 10.

Pour ce faire également, le système d'éclairage 20 est calibré, ce qui signifie que ses paramètres intrinsèques représentant la distribution de l'intensité de la lumière dans les différentes directions de l'espace et les caractéristiques de cette lumière (spectre, polarisation, etc.) ainsi que ses paramètres extrinsèques (position du système d'éclairage par rapport à l'imageur 10 et au système de prise de vues 3D 34) sont connus et utilisés par l'unité de simulation 36.

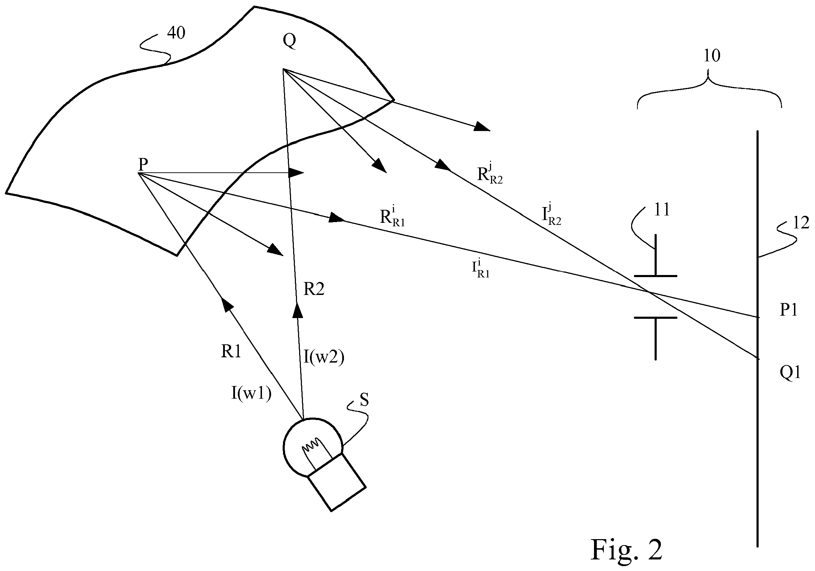

Pour illustrer un exemple d'une méthode de simulation d'éclairage qui pourrait être mise en œuvre par l'unité de simulation 36, on a représenté à la Fig. 2 un objet 40, un imageur 10 sous la forme d'un modèle dit « pinhole » avec son objectif (modélisé sous la forme d'un trou ou pinhole) 11 et son capteur 12 sur lequel est formée l'image de la scène, ainsi qu'une source de lumière S. La source S émet des rayons dans toutes les directions selon une distribution spatiale donnée (l'intensité lumineuse I varie selon la direction $\omega$ du rayon considéré : I($\omega$1) pour le rayon R1 et I($\omega$2) pour le rayon R2. Pour chaque rayon émis par elle, un point d'impact sur l'objet 40 est calculé (tels que les points P et Q) selon des règles de géométrie (intersection du modèle 3D estimé de l'objet 40 avec la droite portant le rayon considéré).

Il est possible de limiter ce calcul aux seuls rayons qui donnent un point d'impact sur l'objet 40 ou même aux seuls rayons qui donnent un point d'impact à l'intérieur d'une ou plusieurs zones d'intérêt de l'objet 40. Il est également possible de limiter ce calcul au seul rayon, tel que le rayon R1, qui est dans l'axe d'émission de la source S, ceci afin de limiter la puissance de calcul nécessaire à ce traitement.

Selon les lois de la réflexion, à chaque point d'impact ainsi calculé, plusieurs rayons sont réémis dépendant de la nature diffusante, réfléchissante, ou les deux à la fois, de la surface de l'objet 40 à ce point. Par exemple, on a représenté à la Fig. 2, aux points P et Q, trois rayons respectivement issus des rayons R1 et R2. Ainsi, le ou chaque rayon réfléchi du point d'impact avec l'objet 40 a une direction et une intensité lumineuse qui sont alors déterminées. Ce rayon réfléchi, s'il est capté par l'imageur 10, forme un point d'impact avec le capteur 12 et y apporte ladite intensité lumineuse. Ainsi, à la Fig. 2, le i$^{ème}$ rayon réfléchi issu du rayon R1, noté $R^i_{R1}$, a une intensité lumineuse notée $I^i_{R1}$ et impacte le capteur 12 au point P1 en y apportant ladite intensité lumineuse $I^i_{R1}$. De même, le j$^{ème}$ rayon réfléchi issu de rayon R2, noté $R^j_{R2}$, a une intensité lumineuse notée $I^j_{R2}$ et impacte le capteur 12 au point Q1 en y apportant ladite intensité lumineuse $I^j_{R2}$.

L'intensité lumineuse totale à un point d'impact sur le capteur 12 est fonction des valeurs des intensités lumineuses pour chaque rayon réfléchi sur l'objet 40 et donc chaque rayon incident issu de la source S.

Dans la modélisation simplifiée de la caméra "Pinhole" exposée ci-dessus, seuls les rayons incidents sur un point de l'objet sont à considérer.

L'unité de simulation 36 met en œuvre cette méthode de simulation d'éclairage pour différents modes d'éclairage du système d'éclairage 20. Ceci est illustré à la Fig. 1 par les **m** flèches qui partent de l'unité de simulation 36 vers l'unité 37.

Selon la présente description, un mode d'éclairage est défini par une combinaison spécifique de valeurs attribuées aux différents paramètres et caractéristiques du système d'éclairage 20, tels que la distribution spatiale de l'intensité lumineuse émise dans une direction donnée et le point d'émission de l'éclairage, la distribution spectrale, la polarisation de la lumière émise, etc.

Par exemple, comme cela est représenté à la Fig. 1, un premier mode d'éclairage est donné par la seule source lumineuse 21 dont la distribution spatiale de l'intensité lumineuse est arrangée à l'intérieur d'un cône centré sur un axe d'émission principal x21. Un second mode d'éclairage est donné par la seule source 22 dont la répartition spatiale de l'intensité lumineuse est arrangée à l'intérieur d'un autre cône centré sur un axe d'émission principal x22 différent de l'axe x21. Un troisième mode d'éclairage peut être donné par les deux sources lumineuses 21 et 22 simultanément allumées.

Comme on l'a vu précédemment, l'unité de simulation 36 estime, pour chaque mode d'éclairage et au temps T0 de prise de vues, l'intensité lumineuse de points du capteur 12 formant ainsi une image, dite image estimée, de l'objet 40 ou d'une zone d'intérêt de celui-ci.

L'unité de commande 30 comporte encore une unité de sélection 37 pour, à partir des images estimées pour différents modes d'éclairage, sélectionner un de ces modes d'éclairage et, ce, sur la base de critères prédéterminés.

Par exemple, *a contrario*, si la simulation d'éclairage précédemment effectuée, pour un mode d'éclairage donné, révèle que, dans cette image estimée, des artéfacts pourraient être créés, ce mode d'éclairage est abandonné. Pourraient également être éliminés, les modes d'éclairage pour lesquels l'intensité lumineuse en un point ou un ensemble de points de l'image estimée est supérieure à un seuil ou inférieure à un autre seuil, etc.

Par contre, pourrait être choisi, le mode d'éclairage qui donne le contraste le plus élevé entre les points de plus faible intensité lumineuse et ceux de plus forte intensité lumineuse.

Aussi, le mode d'éclairage qui permet à la fois de diminuer l'intensité lumineuse des zones plus fortement éclairées et d'augmenter celle des autres zones, homogénéisant ainsi le contraste lumineux sur l'ensemble de l'image estimée sera avantageusement choisi.

L'unité de commande 30 comporte encore une unité de commande 38 pour commander le système d'éclairage 20 dans le mode d'éclairage qui a été sélectionné par l'unité de sélection 37. Elle comporte encore une unité de commande 39 pour commander, au temps T0 de prise de vues, l'imageur 10 pour la prise de vues de l'objet 40.

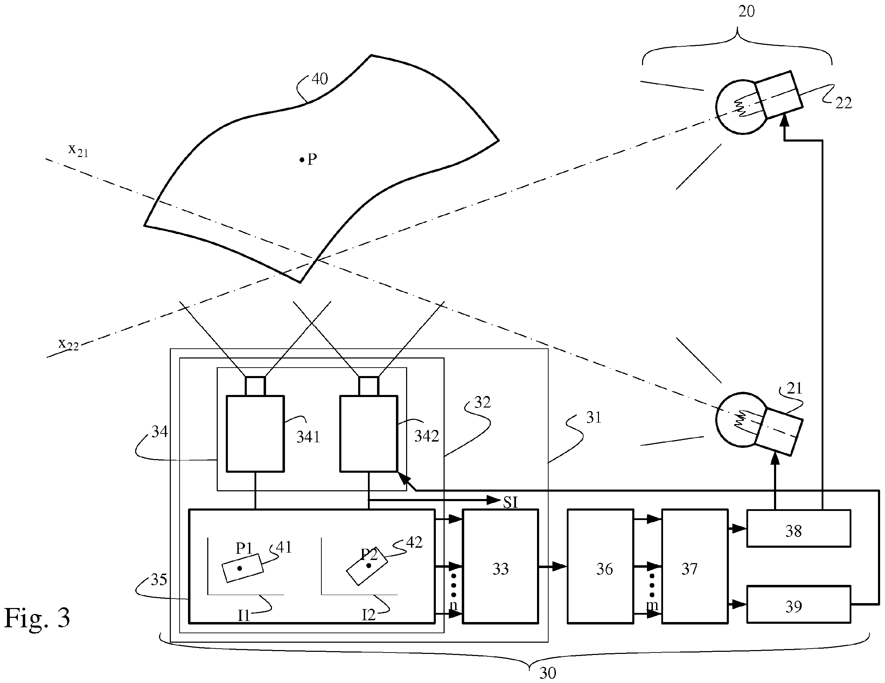

On a représenté à la Fig. 3 un autre mode de réalisation d'un système de prise de vues de l'invention selon lequel l'imageur 10 qui assure la prise de vues est remplacé par une des deux caméras 341 ou 342 (en l'occurrence, la caméra 342 qui a une sortie SI pour les signaux d'image de l'image prise au temps T0 de prise de vues et qui reçoit des signaux de commande de l'unité de commande 39).

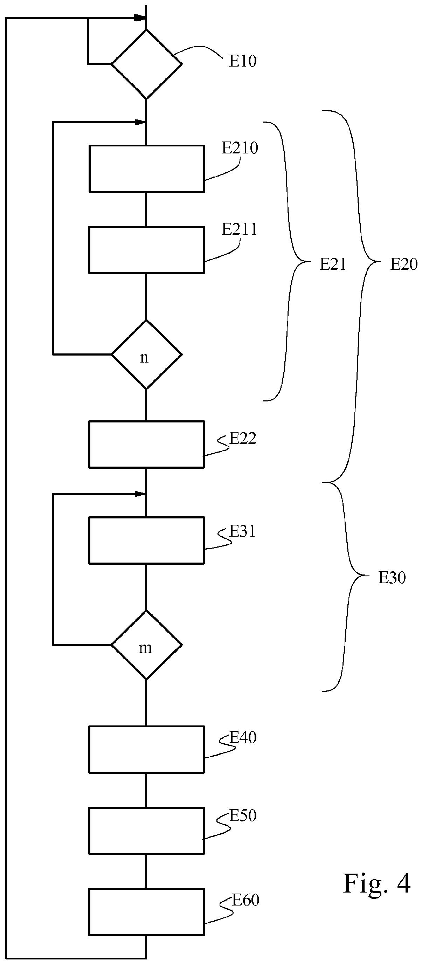

A la Fig. 4, on a représenté un diagramme illustrant un procédé de prise de vues selon l'invention qui est avantageusement mis en œuvre au moyen d'un système de prise de vues, tel que celui représenté à la Fig. 1 ou celui représenté à la Fig. 3.

L'étape E10 est une étape de détection d'un objet dans la scène. L'étape E20 est une étape d'estimation d'un modèle 3D de l'objet tel qu'il se trouvera à un temps T0 prédéterminé de la prise de l'image par ledit imageur 10. L'étape E20 comprend elle-même une étape E21 de détermination d'une pluralité de modèles 3D dudit objet en respectivement plusieurs temps successifs, et une étape E22 d'estimation dudit modèle 3D de l'objet par extrapolation à partir desdits modèles 3D dudit objet déterminés à l'étape E21. L'étape E21 comporte elle-même une étape E210 de prise de vues par un système de prise de vues 3D, tel que le système 34 et une étape E211 de détermination du modèle 3D de l'objet qui a été pris à l'étape E210 par ledit système de prise de vues 3D. Les étapes E210 et E211 se trouvent dans une boucle afin de pouvoir être répétées plusieurs fois, ici n fois.

L'étape E30 est une étape de simulation de l'éclairage de l'objet au temps T0 de prise de vues par l'imageur 10, sur la base du modèle 3D estimé à l'étape E22 et d'un mode d'éclairage donné du système d'éclairage 20. L'étape E30 se trouve dans une boucle pour pouvoir être répétée pour tous les modes d'éclairage envisagés du système d'éclairage, ici au nombre de m.

L'étape E40 est une étape de sélection d'un mode d'éclairage particulier du système d'éclairage.

Enfin, l'étape E50 est une étape de commande du système d'éclairage dans le mode d'éclairage qui a été sélectionné à l'étape E40 et l'étape E60 une étape de commande de l'imageur 10 afin que soit effectuée la prise de vues au temps T0 de prise de vues.

Ce procédé est mis en œuvre par une unité de commande telle que l'unité de commande 30 des Figs. 1 et 3.

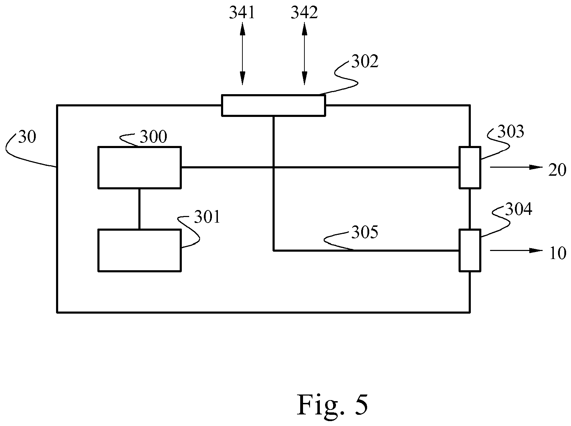

Avantageusement, les unités 33, 35 à 39 de cette unité de commande 30 sont mises en œuvre au moyen d'un système informatique tel que celui qui est schématisé à la Fig. 5.

Ce système informatique comprend une unité centrale 300 associée à une mémoire 301 dans laquelle sont mémorisés, d'une part, le code des instructions d'un programme exécuté par l'unité centrale 300 et, d'autre part, des données servant à l'exécution dudit programme. Il comporte encore un port 302 pour l'interfaçage avec le système de prise de vues 3D, par exemple avec les caméras 341 et 342 des Figs. 1 et 3, un port 303 pour l'interfaçage avec le système d'éclairage, par exemple avec le système d'éclairage 20 des Figs. 1 et 3, et un port 304 pour l'interfaçage avec l'imageur, par exemple l'imageur 10 de la Fig. 1 ou la caméra 342 de la Fig. 3. Les ports 302, 303 et 304 ainsi que l'unité centrale 300 sont reliés entre eux au moyen d'un bus 305.

Lorsque l'unité centrale 300 exécute le programme dont le code des instructions est contenu dans la mémoire 331, elle met en œuvre le procédé qui a été décrit en relation avec la Fig. 4.

## Revendications

1. Procédé de prise, au moyen d'un imageur, d'une ou plusieurs images d'un objet ou d'une partie d'un objet présenté à distance devant ledit imageur, ledit objet étant éclairé au moyen d'un système d'éclairage, comportant les étapes suivantes :

   - une étape d'estimation d'un modèle 3D de l'objet tel qu'il se trouvera à un temps prédéterminé de la prise de l'image par ledit imageur, dit modèle 3D prédit, ladite étape d'estimation du modèle 3D prédit comprenant une étape de détermination d'une pluralité de modèles 3D dudit objet en respectivement plusieurs temps successifs, dits modèles 3D acquis, l'étape d'estimation des modèles 3D acquis comprenant pour chaque modèle 3D acquis une étape d'acquisition d'images de l'objet par un système de prise de vues 3D et une étape de détermination du modèle 3D acquis à partir des images de l'objet prises par le système de prise de vues, ledit modèle 3D prédit étant estimé par extrapolation à partir desdits modèles 3D acquis,
   - une étape de simulation, en utilisant ledit modèle 3D prédit, de l'éclairage de l'objet tel qu'il se trouvera audit temps prédéterminé selon une pluralité de modes d'éclairage afin d'obtenir pour chaque mode d'éclairage de la pluralité une image estimée dudit objet dans ledit mode d'éclairage,
   - une étape de sélection d'un mode d'éclairage du système d'éclairage à partir des images estimées,
   - une étape de commande du système d'éclairage afin qu'il se trouve dans le mode d'éclairage qui a été sélectionné et,
   - une étape de commande de l'imageur, audit temps de la prise de l'image dudit objet, afin que ladite prise soit effectuée.

2. Procédé de prise d'une image selon la revendication 1 où ledit système de prise de vues 3D est un système à lumière structurée.

3. Procédé de prise d'une image selon la revendication 1 où ledit système de prise de vues 3D est constitué d'une caméra temps de vol.

4. Procédé de prise d'une image selon la revendication 1 ou 2, où ladite étape de détermination dudit modèle 3D met en œuvre une méthode stéréoscopique à partir de couples d'images prises par ledit système de prise de vues 3D, ledit système de prise de vues 3D étant constitué soit de deux caméras prenant respectivement les images de chaque couple simultanément, soit une caméra prenant les images de chaque couple à deux temps différents.

## EP 3 069 299 B1

5. Procédé de prise d'une image selon la revendication 4 où l'une des deux caméras ou ladite caméra dudit système de prise de vues 3D constitue l'imageur.

6. Système de prise de vues d'un objet, du type comportant un imageur et un système d'éclairage prévu pour éclairer ledit objet, comportant en outre une unité de traitement qui comporte :

   - des moyens pour estimer un modèle 3D de l'objet tel qu'il se trouvera à un temps T0 de prise de vues par ledit imageur, dit modèle 3D prédit, lesdits moyens d'estimation du modèle 3D prédit comprenant des moyens de détermination d'une pluralité de modèles 3D dudit objet en respectivement plusieurs temps successifs, dits modèles 3D acquis, les moyens d'estimation des modèles 3D acquis comprenant pour chaque modèle 3D acquis des moyens de prise d'images de l'objet par un système de prise de vues 3D et des moyens de détermination du modèle 3D acquis à partir des images de l'objet prises par le système de prise de vues, ledit modèle 3D prédit étant estimé par des moyens d'extrapolation à partir desdits modèles 3D acquis.
   - des moyens pour simuler, en utilisant ledit modèle 3D prédit, l'éclairage de l'objet tel qu'il se trouvera audit temps T0 selon une pluralité de modes d'éclairage afin d'obtenir, pour chaque mode d'éclairage, une image estimée dudit objet dans ledit mode d'éclairage,
   - des moyens pour sélectionner un mode d'éclairage particulier du système d'éclairage à partir desdites images estimées,
   - des moyens pour commander ledit système d'éclairage dans le mode d'éclairage qui a été sélectionné et,
   - des moyens pour commander, audit temps T0, l'imageur afin que soit effectuée la prise de l'image dudit objet.

7. Système de prise de vues d'un objet selon la revendication 6 où ledit système de prise de vues 3D est un système à lumière structurée.

8. Système de prise de vues d'un objet selon la revendication 6 où ledit système de prise de vues 3D est constitué d'une caméra temps de vol.

9. Système de prise de vues selon la revendication 6 où ledit système de prise de vues 3D est constitué de deux caméras et lesdits moyens de détermination dudit modèle 3D mettent en œuvre une méthode stéréoscopique.

10. Programme inscrit sur un support et destiné à être chargé dans une unité de traitement d'un système de prise de vues selon une des revendications 6 à 9 , ledit programme comprenant des instructions ou parties de code pour mettre en œuvre les étapes d'un procédé de prise d'une image d'un objet selon une des revendications 1 à 3, lorsque ledit programme est exécuté par ladite unité de traitement.

**Patentansprüche**

1. Verfahren zur Aufnahme eines oder mehrerer Bilder eines Gegenstands oder eines Teils eines Gegenstands, der in Abstand vor dem Bildgeber präsentiert wird, mittels eines Bildgebers, wobei der Gegenstand mittels eines Beleuchtungssystems beleuchtet wird, das die folgenden Schritte aufweist:

   - einen Schritt der Schätzung eines 3D-Modells des Gegenstands, wie er sich zu einem vorbestimmten Zeitpunkt der Aufnahme des Bilds durch den Bildgeber befinden wird, vorhergesagtes 3D-Modell genannt, wobei der Schritt der Schätzung des vorhergesagten 3D-Modells einen Schritt der Bestimmung einer Vielzahl von 3D-Modellen des Gegenstands zu mehreren aufeinanderfolgenden Zeitpunkten, erfasste 3D-Modelle genannt, enthält, wobei der Schritt der Schätzung der erfassten 3D-Modelle für jedes erfasste 3D-Modell einen Schritt der Erfassung von Bildern des Gegenstands durch ein 3D-Bildaufnahmesystem und einen Schritt der Bestimmung des erfassten 3D-Modells ausgehend von den vom Bildaufnahmesystem aufgenommenen Bildern des Gegenstands enthält, wobei das vorhergesagte 3D-Modell durch Extrapolation ausgehend von den erfassten 3D-Modellen geschätzt wird,
   - einen Schritt der Simulation, unter Verwendung des vorhergesagten 3D-Modells, der Beleuchtung des Gegenstands, wie er sich zum vorbestimmten Zeitpunkt befinden wird, gemäß einer Vielzahl von Beleuchtungsmodi, um für jeden Beleuchtungsmodus der Vielzahl ein geschätztes Bild des Gegenstands in dem Beleuchtungsmodus zu erhalten,
   - einen Schritt der Auswahl eines Beleuchtungsmodus des Beleuchtungssystems ausgehend von den geschätzten Bildern,
   - einen Schritt der Steuerung des Beleuchtungssystems, damit es sich in dem Beleuchtungsmodus befindet, der ausgewählt wurde, und

- einen Schritt der Steuerung des Bildgebers zum Zeitpunkt der Aufnahme des Bilds des Gegenstands, damit die Aufnahme ausgeführt wird.

2. Verfahren zur Aufnahme eines Bilds nach Anspruch 1, wobei das 3D-Bildaufnahmesystem ein System mit strukturiertem Licht ist.

3. Verfahren zur Aufnahme eines Bilds nach Anspruch 1, wobei das 3D-Bildaufnahmesystem aus einer Flugzeitkamera besteht.

4. Verfahren zur Aufnahme eines Bilds nach Anspruch 1 oder 2, wobei der Schritt der Bestimmung des 3D-Modells eine stereoskopische Methode ausgehend von Paaren von Bildern anwendet, die vom 3D-Bildaufnahmesystem aufgenommen werden, wobei das 3D-Bildaufnahmesystem entweder aus zwei Kameras, die die Bilder jedes Paars gleichzeitig aufnehmen, oder einer Kamera besteht, die die Bilder jedes Paars zu zwei unterschiedlichen Zeitpunkten aufnimmt.

5. Verfahren zur Aufnahme eines Bilds nach Anspruch 4, wobei die eine der zwei Kameras oder die Kamera des 3D-Bildaufnahmesystems den Bildgeber bildet.

6. Bildaufnahmesystem eines Gegenstands von der Art, die einen Bildgeber und ein Beleuchtungssystem aufweist, das vorgesehen ist, den Gegenstand zu beleuchten, die außerdem eine Verarbeitungseinheit aufweist, die aufweist:

- Einrichtungen zum Schätzen eines 3D-Modells des Gegenstands, wie er sich zu einem Zeitpunkt T0 der Bildaufnahme durch den Bildgeber befinden wird, vorhergesagtes 3D-Modell genannt, wobei die Schätzeinrichtungen des vorhergesagten 3D-Modells Einrichtungen zur Bestimmung einer Vielzahl von 3D-Modellen des Gegenstands zu mehreren aufeinanderfolgenden Zeitpunkten enthalten, erfasste 3D-Modelle genannt, wobei die Schätzeinrichtungen der erfassten 3D-Modelle für jedes erfasste 3D-Modell Einrichtungen zur Aufnahme von Bildern des Gegenstands durch ein 3D-Bildaufnahmesystem und Einrichtungen zur Bestimmung des erfassten 3D-Modells ausgehend von den vom Bildaufnahmesystem aufgenommenen Bildern des Gegenstands enthalten, wobei das vorhergesagte 3D-Modell ausgehend von den erfassten 3D-Modellen von Extrapolationseinrichtungen geschätzt wird,
- Einrichtungen zum Simulieren, unter Verwendung des vorhergesagten 3D-Modells, der Beleuchtung des Gegenstands, wie er sich zum Zeitpunkt T0 befinden wird, gemäß einer Vielzahl von Beleuchtungsmodi, um für jeden Beleuchtungsmodus ein geschätztes Bild des Gegenstands in dem Beleuchtungsmodus zu erhalten,
- Einrichtungen zur Auswahl eines besonderen Beleuchtungsmodus des Beleuchtungssystems ausgehend von den geschätzten Bildern,
- Einrichtungen zum Steuern des Beleuchtungssystems in dem Beleuchtungsmodus, der ausgewählt wurde, und
- Einrichtungen zum Steuern des Bildgebers zum Zeitpunkt T0, damit die Aufnahme des Bilds des Gegenstands ausgeführt wird.

7. Bildaufnahmesystem eines Gegenstands nach Anspruch 6, wobei das 3D-Bildaufnahmesystem 3D ein System mit strukturiertem Licht ist.

8. Bildaufnahmesystem eines Gegenstands nach Anspruch 6, wobei das 3D-Bildaufnahmesystem aus einer Flugzeitkamera besteht.

9. Bildaufnahmesystem nach Anspruch 6, wobei das 3D-Bildaufnahmesystem aus zwei Kameras besteht und die Bestimmungseinrichtungen des 3D-Modells eine stereoskopische Methode anwenden.

10. Programm, das auf einem Träger aufgezeichnet und dazu bestimmt ist, in eine Verarbeitungseinheit eines Bildaufnahmesystems nach einem der Ansprüche 6 bis 9 geladen zu werden, wobei das Programm Anweisungen oder Codebereiche enthält, um die Schritte eines Verfahrens zur Aufnahme eines Bilds eines Gegenstands nach einem der Ansprüche 1 bis 3 durchzuführen, wenn das Programm von der Verarbeitungseinheit ausgeführt wird.

**Claims**

1. Method for capturing, by means of an imager, one or more images of an object or of a portion of an object presented at a distance in front of said imager, said object being lit by means of a lighting system, comprising the following steps:

   - a step of estimating a 3D model of the object as it will be at a predefined time at which said imager captures the image, referred to as the predicted 3D model, said step of estimating the predicted 3D model comprising a step of defining a plurality of 3D models of said object at a plurality of respective consecutive times, referred to as the acquired 3D models, the step of estimating the acquired 3D models comprising, for each acquired 3D model, a step of acquiring images of the object by means of a 3D image-capturing system and a step of defining the acquired 3D model on the basis of the images of the object captured by the image-capturing system, said predicted 3D model being estimated by extrapolating from said acquired 3D models,
   - a step of simulating, using said predicted 3D model, the lighting of the object as it will be at said predefined time according to a plurality of lighting modes in order to obtain, for each lighting mode of the plurality, an estimated image of said object in said lighting mode,
   - a step of selecting a lighting mode of the lighting system on the basis of the estimated images,
   - a step of controlling the lighting system in order for it to be in the lighting mode that was selected, and
   - a step of controlling the imager, at said time at which the image of said object is captured, in order for said capture to be made.

2. Method for capturing an image according to Claim 1, wherein said 3D image-capturing system is a structured-light system.

3. Method for capturing an image according to Claim 1, wherein said 3D image-capturing system is formed of a time-of-flight camera.

4. Method for capturing an image according to Claim 1 or 2, wherein said step of defining said 3D model implements a stereoscopic method based on pairs of images captured by said 3D image-capturing system, said 3D image-capturing system being formed of either two cameras capturing the images of each respective pair simultaneously or one camera capturing the images of each pair at two different times.

5. Method for capturing an image according to Claim 4, wherein one of the two cameras or said camera of said 3D image-capturing system forms the imager.

6. System for capturing images of an object, of the type comprising an imager and a lighting system provided to light said object, further comprising a processing unit that comprises:

   - means for estimating a 3D model of the object as it will be at a time T0 at which said imager captures images, referred to as the predicted 3D model, said means for estimating the predicted 3D model comprising means for defining a plurality of 3D models of said object at a plurality of respective consecutive times, referred to as the acquired 3D models, the means for estimating the acquired 3D models comprising, for each acquired 3D model, means for capturing images of the object by means of a 3D image-capturing system and means for defining the acquired 3D model on the basis of the images of the object captured by the image-capturing system, said predicted 3D model being estimated by means for extrapolating from said acquired 3D models,
   - means for simulating, using said predicted 3D model, the lighting of the object as it will be at said time T0 according to a plurality of lighting modes in order to obtain, for each lighting mode, an estimated image of said object in said lighting mode,
   - means for selecting a particular lighting mode of the lighting system on the basis of said estimated images,
   - means for controlling said lighting system to be in the lighting mode that was selected, and
   - means for controlling, at said time T0, the imager in order for the image of said object to be captured.

7. System for capturing images of an object according to Claim 6, wherein said 3D image-capturing system is a structured-light system.

8. System for capturing images of an object according to Claim 6, wherein said 3D image-capturing system is formed of a time-of-flight camera.

9. Image-capturing system according to Claim 6, wherein said 3D image-capturing system is formed of two cameras and said means for defining said 3D model implement a stereoscopic method.

10. Program written on a medium and intended to be loaded into a processing unit of an image-capturing system according to one of Claims 6 to 9, said program comprising instructions or portions of code for implementing the steps of a method for capturing an image of an object according to one of Claims 1 to 3 when said program is executed by said processing unit.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010034432 A

**Littérature non-brevet citée dans la description**

- **PERE-PAU VÁZQUEZ et al.** Fast Adaptive Selection of Best Views''In:''Field Programmable Logic and Application. Springer Berlin Heidelberg, 01 Janvier 2003
- Semantics-driven best view of 3D shapes. **MORTARA M et al.** COMPUTERS AND GRAPHICS. ELSEVIER, 01 Juin 2009, vol. 33, 280-290
- **LOWE, DAVID G.** Distinctive Image Features From Scale-Invariant Keypoints. *International journal of computer vision,* 2004, vol. 60 (2), 91-110
- **HERBERT BAY ; TINNE TUYTELAARS ; LUC VAN GOOL.** SURF: Speeded Up Robust Features. *9th European Conference on Computer Vision, Graz, Autriche,* 07 Mai 2006
- **HARTLEY, RICHARD ; ANDREW ZISSERMAN.** Multiple View Geometry In Computer Vision. Cambridge, 2000